# EUROPÄISCHE PATENTANMELDUNG

(11) **EP 2 385 519 A2**
(43) Veröffentlichungstag der Anmeldung: **09.11.2011**
(21) Anmeldenummer: 11006376.5
(22) Anmeldetag: 28.03.2002
(51) Int. Cl.: G10K 11/16, G10K 15/08, G10K 15/12

(54) **Einrichtung zum Gestalten der Akustik eines Raumes**

(30) Priorität: 11.04.2001 DE 10118187
(62) Teilanmeldung aus: 02007193.2
(71) Anmelder: puren GmbH, 88662 Überlingen (DE)
(72) Erfinder: Boesnecker, Robert, 84030 Ergolding (DE)
(74) Vertreter: Daub, Thomas

(57) **Zusammenfassung**

Die Erfindung geht aus von einer Einrichtung zum Gestalten der Akustik eines Raumes, die mindestens eine Schall absorbierende Einheit mit wenigstens einem Schall absorbierenden Element besitzt, wobei in die Schall absorbierende Einheit (1 bzw. 6) ein Lautsprecher (3, 4 bzw. 6,4) integriert ist.

Es wird vorgeschlagen, dass die Schall absorbierende Einheit (1 bzw. 6) ein plattenförmiges Absorberelement (6) aufweist, das einen akustischen Absorber bildet, wobei diese eine Funktion durch eine zweite Funktion ergänzt ist, indem auf einer der Oberflächen dieses Absorberelements ein elektroakustischer Übertrager (4) festgelegt ist, der dazu vorgesehen ist, durch einen Tongenerator angesteuert zu werden.

## Beschreibung

Die Erfindung bezieht sich auf eine Einrichtung zum Gestalten der Akustik eines Raumes gemäß dem Oberbegriff des Patentanspruches 1.

Die Akustik eines Raumes ist bekanntlich dadurch bestimmt, unter welchen Bedingungen sich Schall in diesem Raum ausbreitet, das heißt unter anderem auch, wie Schallwellen an Begrenzungen des Raumes reflektiert werden. Dies ist am einfachsten an extremen Beispielen zu verdeutlichen: Besitzt ein großer Raum insbesondere kahle, unverkleidete Wände, werden Schallwellen an diesen mit hohem Wirkungsgrad reflektiert. Schallwellen breiten sich im Raum über Mehrfachreflexionen aus. So breitet sich eine Schallwelle über solche Mehrfachreflexionen auf unterschiedlichen Strecken, damit voneinander verschiedenen Weglängen im Raum aus. Ein menschlicher Hörer hat deshalb in diesem angenommenen Beispiel den Eindruck, sich in einem hallenden Raum aufzuhalten. Den Gegensatz dazu bildet ein schalltoter Raum, dessen Raumbegrenzungen, also insbesondere Wände und Decke zu diesem Zweck so ausgestaltet sind, dass auftreffende Schallwellen im Idealfall völlig absorbiert werden. In den meisten Anwendungsfällen, in denen eine Raumgestaltung unter anderem bewusst auch darauf ausgerichtet ist, dem Raum eine bestimmte akustische Qualität zu verleihen, werden dafür gezielt entsprechende Maßnahmen ergriffen, um eine Raumakustik zu erzielen.

Die Bauakustik bietet zur Lösung im Grunde zwei Alternativen in Form von passiven beziehungsweise aktiven akustischen Mitteln. Dabei wird hier unter einem passiven akustischen Mittel ein Mittel, eine Maßnahme zum gezielten, unter anderem auch frequenzabhängigen Beeinflussen der Schallausbreitung in einem Raum verstanden. Unter einem aktiven akustischen Mittel ist dagegen jede Maßnahme zu verstehen, die in Form einer Schallquelle die Intensität und sowie die Art der Ausstrahlung von Schall in einem Raum verändert. Bekannte passive akustische Elemente können je nach dem speziellen Einsatzfall entweder den Schall besonders gut reflektierend beziehungsweise absorbierend ausgebildet sein. Ein typisches Beispiel für konventionelle passive akustische Einheiten ist die bekannte Ausgestaltung von Wänden eines Tonstudios. Die eigentliche Raumbegrenzung, d. h. also eine angenommen nackte Wandfläche des Tonstudios ist - akustisch bewertet - nicht bedeutsam. Wesentlich dagegen sind die an ihr befestigten akustisch wirksamen Wandelemente, insbesondere Absorberelemente. Ein Absorberelement kann einfach als eine Bahn aus einem Glaswollevlies oder auch in Form einer sogenannten Absorberwaffel ausgebildet sein. In Richtung des Rauminneren ist dieses Absorberelement beispielsweise durch eine Lochrasterplatte abgedeckt, die etwa aus Holz oder Presspappe bestehen kann. Die beispielsweise in einem vorgegebenen Abstand zum Absorberelement angeordnete Lochrasterplatte dient einerseits zum mechanischen Schutz des dahinter liegenden Absorberelementes und hat andererseits eine definierte akustische Funktion. Mittels des Lochdurchmessers sowie des Rastermaßes der Löcher, damit dem Verhältnis von gesamter Lochfläche der Lochrasterplatte zu der verbleibenden Fläche des Plattenmaterials werden die Absorberfrequenzen dieser passiven akustischen Einrichtung abgestimmt.

Ein naheliegendes Beispiel für aktive akustische Mittel andererseits sind gegebenenfalls mehrere z. B. auf einer Bühne eines Vortragssaales aufgestellte Mikrofone, die mit einer im Saal verteilt angeordneten Lautsprecheranlage zusammenwirken, um Sprache oder Musik von der Bühne des Saales aus in alle Saalbereiche zu übertragen und dort mit möglichst gleicher Qualität wiederzugeben. Die tägliche Lebenserfahrung lehrt, dass das Ziel, eine gute Raumakustik möglichst auch für unterschiedliche Nutzungen eines Raumes zu gestalten, mit bekannten akustischen Mitteln selbst bei relativ großem experimentellem Aufwand häufig nur unvollkommen erreicht wird.

Der vorliegenden Erfindung liegt daher die Aufgabe zugrunde, für eine Einrichtung der eingangs genannten Art eine Ausführungsform zu schaffen, die funktional so ausgebildet ist, dass sie auf eine relativ einfache Weise variabel an unterschiedliche akustische Erfordernisse anzupassen ist, mit anderen Worten eine akustisch wirksame Einheit bildet, die ohne weiteres auf unterschiedliche Randbedingungen einzelner Anwendungsfälle einzustellen ist, womit dieser Einrichtung ein weiter Anwendungsbereich erschlossen ist.

Bei einer Einrichtung der eingangs genannten Art wird diese Aufgabe durch das im Kennzeichen des Patentanspruches 1 angegebene Merkmal gelöst.

Die Erfindung löst sich von der konventionellen Betrachtungsweise, zwischen den Alternativen passiv beziehungsweise aktiv ausgebildeter akustischer Elemente oder Einheiten zu unterscheiden, sie verfolgt einen davon losgelösten Ansatzpunkt. Durch die Integration eines Lautsprechers in die Schall absorbierende Einheit wird eine Einrichtung geschaffen, die sich einerseits wie ein passives akustisches Mittel verhält und Schall absorbiert, sich andererseits aber selbst als ein aktives akustisches Mittel darstellt. Mit modernen technologischen Möglichkeiten der elektronischen Signalformung beziehungsweise Signalverarbeitung hat man es in der Hand, den integrierten Lautsprecher in einer ganz definierten, auf einen bestimmten Anwendungsfall abgestimmten Art und Weise zu betreiben und damit eine flexibel auf unterschiedliche Anforderungen bei bestimmten Anwendungsfällen abstimmbare Einrichtung für die Raumakustik zu schaffen. Welche akustischen Gestaltungsmöglichkeiten sich damit ergeben, wird beispielhaft anhand der nachfolgenden Diskussion von in Unteransprüchen definierten Weiterbildungen der Erfindung verdeutlicht.

Gemäß Patentanspruch 2 weist zum Beispiel die Schall absorbierende Einheit in an sich bekannter Weise ein Gehäuse mit einer Rückwand, vor der im Gehäuseinneren das Schall absorbierende Element angeordnet ist und mit einer Vorderfront auf, die als Lochplatte ausgebildet sowie in einem vorgegebe- nen Abstand zum Schall absorbierenden Element angeordnet ist. Bei dieser Weiterbildung ist die Vorderfront als eine laminierte Platte ausgebildet, deren Kernlage aus einem geschäumten Kunststoffmaterial besteht. Auf dieser laminierten Platte ist ein akustischer Übertrager angeordnet, der im aktiven Betriebszustand aufgrund eines ihm aus einem Tongenerator zugeführten elektroakustischen Signales diese laminierte Platte zu Biegeschwingungen und damit zur Schallabgabe anregt. Die laminierte Platte ist damit ein absorbierendes Element für auftreffenden Schall einerseits und zugleich eine über den akustischen Übertrager angeregte Schallquelle andererseits. Gemäß einer anderen Weiterbildung der Erfindung ist als Material für die Kernlage der Vorderfront Polyurethanschaum verwendet.

Bei einer anderen Ausführungsform der Erfindung ist die Schall absorbierende Einheit in an sich bekannter Weise als eine Absorberplatte ausgebildet, die aus einem offenporigen Glasschaummaterial besteht. Bei dieser Weiterbildung ist auf dieser Absorberplatte ebenfalls ein akustischer Übertrager angeordnet, der im aktiven Betriebszustand aufgrund eines ihm wiederum aus einem Tongenerator zugeführten elektroakustischen Signales diese Absorberplatte zu Biegeschwingungen und damit zur Schallabgabe anregt.

Die vorgenannten weiteren Ausführungsformen der Erfindung belegen beispielhaft, dass durchaus unterschiedliche konventionelle passive akustische Elemente ohne weiteres als Träger für den elektroakustischen Übertrager in Frage kommen und eingesetzt werden können, sofern sie aufgrund ihrer Steifigkeit und Masse geeignet sind, sich mittels des elektroakustischen Übertragers zu Biegeschwingungen anregen zu lassen.

In weiterer Ausgestaltung der Erfindung besteht der Tongenerator aus einem Signalempfänger mit einem Ausgang sowie einer Signalwandlereinheit, die in der Übertragungsstrecke zwischen dem Ausgang des Signalempfängers und dem Eingang des elektroakustischen Übertragers angeordnet ist. Besonders vorteilhaft ist es, diese Signalwandlereinheit als einen digitalen Signalprozessor auszubilden. Die Möglichkeit, diesen Signalprozessor zu programmieren, liefert die Voraussetzung dafür, eine so ausgestattete erfindungsgemäße Einrichtung in flexibler Weise an unterschiedliche akustische Anforderungen eines einzelnen Anwendungsfalles anzupassen. Andere Weiterbildungen der Erfindung sind in weiteren Patentansprüchen gekennzeichnet.

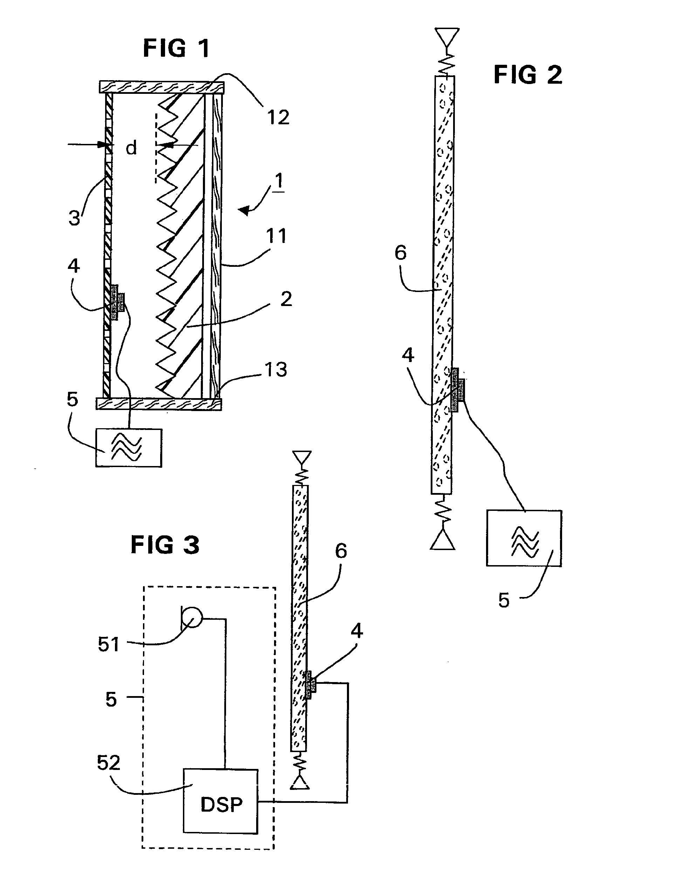

Ausführungsbeispiele der Erfindung werden im folgenden anhand der Zeichnung näher erläutert, dabei zeigt: Figur 1 eine erste Ausführungsform einer Einrichtung zum Gestalten der Akustik eines Raumes mit einer in einem Gehäuse angeordneten Schall absorbierenden Einheit, deren Vorderfront als eine Lochplatte ausgebildet ist, auf deren Innenseite ein elektroakustischer Übertrager befestigt ist,

Figur 2 eine weitere Ausführungsform einer Einrichtung zum Gestalten der Akustik eines Raumes mit einer Schall absorbierenden Einheit, die in diesem Beispiel aus einer aus einem offenporigen Glasschaummaterial hergestellten Absorberplatte besteht, auf deren Innenseite wiederum ein elektroakustischer Übertrager befestigt ist und

Figur 3 eine weitere Ausführungsform einer Einrichtung zum Gestalten der Akustik eines Raumes in einer Darstellung, die schematisch verdeutlichen soll, dass eine Absorberplatte einerseits als ein passives akustisches Mittel und andererseits zugleich als ein aktives akustisches Mittel eingesetzt wird, indem der Eingangskreis des auf der Absorberplatte festgelegten elektroakustischen Übertragers ein Mikrofon als Schallempfänger aufweist, das an einen Signalwandler in Form eines digitalen Signalprozessors angeschlossen ist, der seinerseits den elektroakustischen Übertrager ansteuert.

In Figur 1 ist in einem Querschnitt eine Einrichtung zum Gestalten der Akustik eines Raumes dargestellt, die in wesentlichen Teilen ähnlich wie an sich bekannte akustische Wandverkleidungen, beispielsweise für ein Tonstudio, aufgebaut ist. In diesem Beispiel ist in einem aus Rückwand 11, Deckfläche 12 und Boden 13 gebildeten Rahmen 1 an der Rückwand 11 ein Schall absorbierendes Element 2 festgelegt. Für das Schall absorbierende Element 2 kommen eine Reihe von an sich bekannten Ausführungsformen in Betracht, hier in diesem Beispiel ist es als Teil einer Bahn aus Pyramidenschaum ausgebildet, wegen seiner Oberflächenform wird diese Ausführungsform eines Schall absorbierenden Elementes häufig auch als Absorberwaffel bezeichnet. In einem definierten Abstand d ist vor diesem Schall absorbierenden Element 2 eine Vorderfront in Form einer Lochplatte 3 vorgesehen.

Es bedarf hier keiner ins Detail gehenden Erläuterung der akustischen Funktion der vorstehend beschriebenen Schall absorbierenden Einheit. Denn insoweit ist ihr Aufbau sowie die dadurch zu erzielende akustische Funktion in der Bauakustik durchaus bekannt. Zusammenfassend sei deshalb nur erwähnt, dass der Absorptionsgrad für auf die Einheit auftreffende Schallwellen im wesentlichen durch die geometrischen und physikalischen Eigenschaften des Schall absorbierenden Elementes 2 festgelegt ist. Andererseits ist insbesondere durch die Geometrie der Lochplatte 3 in Aufbau und Anordnung, wie Lochdurchmesser, Rastermaß, auch den Abstand d zum Schall absorbierenden Element 2 im wesentlichen der Frequenzbereich festgelegt, in dem diese absorbierende Einheit in dieser Form akustisch wirksam ist.

Wichtig für das hier zu beschreibende Ausführungsbeispiel ist, dass in diese an sich bekannte Schall absorbierende Einheit 1, 2, 3 ein Lautsprecher integriert ist, d. h. diese Einheit nicht nur als eine passive Einheit Schall absorbiert, sondern zugleich als akustisch aktives Mittel selbst eine Schallquelle bildet. Die Schallquelle ist hier durch die

Lochplatte 3 gebildet, auf deren dem Schall absorbierenden Element 2 zugewandten Rückseite ein elektroakustischer Übertrager 4 festgelegt ist. Figur 1 deutet an, dass dieser elektroakustische Übertrager 4 durch einen Tongenerator 5 angesteuert wird. Unter der Voraussetzung, dass die Masse der Lochplatte 3 einerseits relativ gering und zugleich ihre Biegesteifigkeit ausreichend groß ist, wird der elektroakustische Übertrager 4 in einem durch den Tongenerator 5 angesteuerten aktiven Betriebszustand die Lochplatte 3 zu Biegeschwingungen und damit zur Schallabgabe anregen.

Um diese physikalischen Voraussetzungen zu erfüllen, wird die Lochplatte 3 - im Gegensatz zu den bekannten Ausführungsformen bei konventionellen Wandverkleidungen - nicht aus Holz, Pressstoffplatten oder ähnlichem sondern aus Materialien hergestellt, die insbesondere die vorstehend genannten Voraussetzungen gut erfüllen. Ein Plattenmaterial, das die gewünschten Eigenschaften bietet, ist Polyurethanschaum. Vorteilhaft ist es, eine Lochplatte aus Polyurethanschaum laminiert auszugestalten, d. h. eine etwas dickere Mittenlage aus Polyurethanschaum durch zwei im Verhältnis dazu dünne, widerstandsfähige und biegesteife Außenlagen abzudecken. Metallische Folien könnten zum Beispiel diesen Zweck erfüllen. In dieser konstruktiven Ausgestaltung eignet sich die Lochplatte 3 insbesondere dazu, mit hohem Wirkungsgrad als Schall abgebendes Element eingesetzt zu werden, ohne dass seine weitere Funktion als Teil einer Schall absorbierenden Einheit vernachlässigt wird.

In Figur 2 ist schematisch ein weiteres Ausführungsbeispiel für eine sowohl akustisch passive als auch zugleich aktive Einrichtung dargestellt. Ein Material, das einen hohen Schallabsorptionsgrad besitzt, ist ein offenporiger Glasschaum, der durch das Fraunhofer Institut für Baupysik, Stuttgart entwickelt wurde, unter dem Markennamen "REAPOR"® im Handel ist. Dieser Glasschaum wird vorteilhaft als Recyclingprodukt aus Altglas hergestellt, besitzt - da er offenporig ist - gute Absorptionseigenschaften und ist zudem sehr hitzebeständig. Wegen der Summe dieser Eigenschaften ist er insbesondere dafür bestimmt und geeignet, als Schall absorbierendes Element in der Bauakustik eingesetzt zu werden.

Dem vorliegenden Anwendungsfall liegt die Erkenntnis zugrunde, dass dieses Schall absorbierende Material ferner auch eine relativ kleine Masse in Verbindung mit einer relativ hohen Biegesteifigkeit aufweist. Falls erforderlich, könnten diese weiteren physikalischen Eigenschaften noch durch eine einseitig aufgebrachte, in bezug auf auftreffende Schallwellen abgewandt angeordnete Versteifungsschicht weiter optimiert werden. Somit ist dieses bekannte Material auch dafür geeignet, gegebenenfalls in an sich einfacher Weise auch dafür zu optimieren, zugleich eine Schall absorbierende als auch, zu Biegeschwingungen angeregt, als Schall erzeugende Platte zu dienen.

Dieser Anwendungsfall ist in Figur 2 in einem weiteren Querschnitt schematisch dargestellt. Ein plattenförmiges Absorberelement 6, wie oben dargelegt aus einem offenporigen Glasschaummaterial hergestellt, ist zum Beispiel elastisch zwischen Boden und Decke eines Raumes eingespannt. In dieser konstruktiven Anordnung bildet es bereits einen akustischen Absorber. Diese eine Funktion wird durch eine zweite Funktion ergänzt, wenn auf einer der Oberflächen dieses Absorberelementes 6 wiederum ein elektroakustischer Übertrager 4 festgelegt ist. Wie im ersten Ausführungsbeispiel ist auch hier vorgesehen, diesen elektroakustischen Übertrager 4 durch einen Tongenerator 5 anzusteuern, so dass ersterer im aktiven Betriebszustand mechanisch schwingt und das Absorberelement 6 seinerseits zu Biegeschwingungen und damit zur Schallabgabe anregt. Einerseits dämpft also das Absorberelement 6 von außen auftreffenden Schall, andererseits bildet es selbst eine Schallquelle.

In Figur 3 ist nun schematisch angedeutet, wie sich diese Doppelfunktion ausgestalten, für den Einsatz in bestimmten Anwendungsfällen optimieren lässt. Bei der bisherigen Beschreibung der in den Figuren 1 beziehungsweise 2 schematisch dargestellten Ausführungsbeispiele wurde ohne weiteres davon ausgegangen, dass es genügt, einen elektroakustischen Übertrager 4 an einer Lochplatte 3 beziehungsweise einem Absorberelement 6 mechanisch festzulegen, diese letztgenannten Elemente mit bestimmten physikalischen Eigenschaften auszustatten sowie einen Tongenerator an den elektroakustischen Übertrager 4 anzuschließen und auf diese Weise einen Flächenlautsprecher mit guten Wiedergabeeigenschaften zu realisieren. In der Praxis ist das entsprechende Ergebnis jedoch in vielen Anwendungsfällen noch nicht zufriedenstellend. Selbst wenn für einen so gestalteten Flächenlautsprecher bei großer Schall abgebender Fläche eine niedrige schwingende Masse sowie eine hohe Biegesteifigkeit realisiert ist, wird es nicht zu vermeiden sein, dass dieser Lautsprecher eine Wiedergabefunktion mit mehr oder minder störenden nichtlinearen Anteilen besitzt. Die Nichtlinearität der Übertragungscharakteristik ist selbst bei einer zielgerichteten Materialauswahl immerhin noch gravierend, "High Fidelity" - Anforderungen genügt ein solcher Lautsprecher zumindestens nicht ohne weiteres.

Das in Figur 3 dargestellte Ausführungsbeispiel zeigt eine Möglichkeit, um diesen Vorbehalt bezüglich der Funktion aufzulösen. Beispielhaft ist für die Ausgestaltung des Tongenerators 5 ein modularer Aufbau mit einem Mikrofon 51 sowie mit einem daran angeschlossenen digitalen Signalprozessor 52 gewählt. An dieser Stelle sei zunächst nur darauf hingewiesen, dass das Mikrofon 51 natürlich auch durch einen anderen Signalgeber ersetzt werden könnte. Ferner sei vorausgesetzt, dass es an sich bereits bekannt ist, die Nichtlinearität der Wiedergabefunktion eines Flächenlautsprechers der hier vorliegenden Art elektronisch zu kompensieren. Dazu misst man den Frequenzgang der akustisch aktiven Einheit, die z. B. aus dem Absorberelement 6 sowie dem darauf festgelegten elektroakustischen Übertrager 4 gebildet ist. Wird anschließend die damit erhaltene individuelle nichtlineare Wiedergabefunktion dieser akustisch aktiven Einheit invertiert, so besitzt man eine von der Frequenz abhängige Kompensationsfunktion. Die Multiplikation eines dem elektroakustischen Übertrager 4 zuzuführenden elektroakustischen Signales mit dieser Kompensationsfunktion bedeutet eine zu der nichtlinearen Wiedergabefunktion der individuellen akustisch aktiven Einheit inverse Signalformung der Eingangssignale des elektroakustischen Übertragers 4. Diese Möglichkeit der Kompensation des Eingangssignales für einen Flächenlautsprecher als solche sowie ihre Realisierung mittels eines digitalen Signalprozessors 52 ist an sich bereits bekannt und ist darum hier auch nicht mehr in allen Details darzulegen.

Wenn die Funktion des in Figur 3 dargestellten Signalprozessors 52 allein darauf beschränkt sein sollte, die Nichtlinearität der Wiedergabefunktion der aus dem Absorberelement 6 und dem elektroakustischen Übertrager 4 gebildeten akustisch aktiven Einheit zu kompensieren, wäre dies eine relativ aufwendige Lösung dafür, ein bestimmtes Schallereignis in seiner Ausbreitung in einem Raum einerseits zu dämpfen und dieses Schallereignis andererseits wieder zu generieren und in den Raum auszustrahlen. Unter bestimmten Bedingungen mag dies dennoch im einzelnen Anwendungsfall durchaus sinnvoll sein. Wenn zum Beispiel in einem Raum eine Mehrzahl solcher akustisch aktiver Einheiten, von denen eine in Figur 3 schematisch dargestellt ist, eingesetzt wird, könnte jede dieser Einheiten individuell ausgesteuert sein, d. h. zum Beispiel überwiegend dämpfend beziehungsweise vorzugsweise Schall abstrahlend eingesetzt werden. Aber nicht nur die Schallintensität ließe sich damit einstellen. Interessant ist in diesem Zusammenhang auch, dass es die Programmierbarkeit des digitalen Signalprozessors 52 gestattet, den "reflektierten" Schall gezielt nichtlinear zu verzerren. Auf diese Weise lassen sich zum Beispiel Holz-, Gips-, auch Beton- oder Glaswände simulieren. Insgesamt betrachtet, hat man es so in der Hand, beispielsweise mit mobilen akustisch aktiven Einheiten die Akustik eines Raumes für einen bestimmten Verwendungszweck elektronisch, gegebenenfalls auch nur temporär und nur auf eine bestimmte Veranstaltung ausgerichtet, einzurichten und zu kontrollieren.

Die in Figur 3 schematisch dargestellte Anordnung besitzt darüber hinaus aber noch weitere Einsatzmöglichkeiten. So könnte der digitale Signalprozessor 52 dieser Anordnung zum Beispiel so programmiert werden, dass er neben der oben dargelegten Signalformung zur Kompensation der Wiedergabefunktion des Flächenlautsprechers 6, 4 ein ihm über das Mikrofon 51 zugeführtes Eingangssignal ferner um ein vorgegebenes, unter Umständen auch einstellbares Zeitintervall verzögert. Akustisch bedeutet dies zunächst, eine sich in Richtung auf das Absorberelement 6 ausbreitende Schallwelle scheint dort angekommen, mit eben dieser Verzögerung reflektiert zu werden. Nimmt ein sich in dem betreffenden Raum aufhaltender Hörer diese Verzögerung wahr, interpretiert er sie als Wegstrecke, als Abstand. Akustisch wird der Raum von dem Hörer damit als weiter, größer empfunden als er tatsächlich ist.

Insbesondere in relativ großen Räumen lässt sich dieses Phänomen sogar umkehren, indem man die Differenz der Laufzeiten von elektrischen Signalen in Kabeln beziehungsweise von Schallwellen in Luft ausnützt. Der Vortrag eines Redners wird beispielsweise über ein an einem Rednerpult angeordnetes Mikrofon aufgenommen. Dessen Ausgangssignale werden über Kabel an an den Saalwänden aufgestellte akustisch aktive Einheiten 4, 52, 6 übertragen und diese so z. B. ohne künstliche Verzögerung zur Schallabstrahlung angeregt. Die so künstlich generierten "Schallreflexionen" an den Saalwänden liegen, zeitlich gesehen, vor den eigentlichen Reflexionen des Luftschalls, die aber von den Absorberelementen 6 zumindestens erheblich gedämpft werden. Zuhörer im Saal haben demnach den Eindruck kürzerer Wegstrecken, interpretieren dies akustisch und nehmen den Saal kleiner wahr als er tatsächlich ist.

Bei den vorgenannten Weiterbildungen der Einrichtung gemäß Figur 3 wurden - genau genommen - lediglich die ersten Reflexionen eines an sich zunächst beliebigen Schallereignisses an realen oder simulierten Wänden beziehungsweise Wandteilen eines Raumes berücksichtigt. Es ist ohne weiteres einseh- beziehungsweise vorstellbar, dass eine derartige Schallausbreitung, bei der Mehrfachreflexionen überhaupt nicht auftreten, für die menschliche Wahrnehmung unnatürlich wirken wird. Dem lässt sich abhelfen, indem man mehrere solcher akustisch aktiver Einheiten 4, 5, 6 vorsieht - z. B. je eine pro Wand beziehungsweise Decke - und diese Einheiten untereinander vernetzt. Dieses Vernetzen könnte beispielsweise dadurch geschehen, dass die digitalen Signalprozessoren 52 der einzelnen akustisch aktiven Einheiten 4, 5, 6 elektrisch untereinander derart verbunden werden, dass sie miteinander Audiodaten austauschen können. Dann steuert jeder der digitalen Signalprozessoren 52 nicht nur den ihm unmittelbar zugeordneten elektroakustischen Übertrager 4 an sondern überträgt seinen Schallanteil ferner auch an die angeschlossenen weiteren digitalen Signalprozessoren. Entsprechend programmiert, generieren diese zweite, dritte, gegebenenfalls auch weitere Reflexionen in einem entsprechenden virtuellen Raum.

Die unterschiedlichen Ausgestaltungen der vorstehend beschriebenen Ausführungsbeispiele belegen, dass sich die Erfindung in einer Vielzahl von Anwendungsfällen, jeweils an diese angepasst, mit Vorteil und flexibel einsetzen lässt. Wäre zum Beispiel die Akustik eines Konzertsaales zu gestalten, spielte neben dem ästhetischen Eindruck des Raumes im gegebenen Zusammenhang insbesondere die Raumakustik eine entsprechende Rolle. In einem solchen Anwendungsfall ist es besonders vorteilhaft, dass das optische Erscheinungsbild der erfindungsgemäß einzusetzenden akustisch wirksamen Einheiten, ungeachtet ihrer akustischen Eigenschaften in weitem Umfang frei wählbar ist. Ferner wird ein entsprechender Aufwand angemessen sein, unter Umständen sogar jede einzelne eingesetzte akustisch wirksame Einheit individuell einjustieren zu können. Denkbar und realisierbar wäre in einem solchen Zusammenhang auch eine Mehrfachnutzung des Hauses, z. B. als Konzertsaal, aber auch für eine Opern- oder Theateraufführung. Zur Anpassung der Raumakustik in einem solchen Fall besitzen die erfindungsgemäßen programmierbaren, damit umsteuerbaren, elektronisch kontrollierten, akustische wirksamen Einheiten die erforderliche funktionale Flexibilität.

In anderen Anwendungsfällen, z. B. bei ortsungebundenen Aufbauten für Tourneeveranstaltungen, kommt es vielmehr darauf an, ungeachtet unterschiedlicher Umgebungsbedingungen auf eine möglichst einfache Weise, dabei reproduzierbar "virtuelle Räume" zu gestalten. In diesem Zusammenhang ist neben der Möglichkeit, gleichartige akustisch wirksame Einheiten individuell einstellen, justieren zu können, von besonderem Vorteil, dass die erfindungsgemäßen Lösungen für akustisch wirksame Einheiten durchaus mobil, das heißt einfach transportabel sind und ähnlich wie Versatzstücke einer Bühnenausstattung eingesetzt werden können, um Zuschauern die hier insbesondere akustische Illusion eines perfekten "virtuellen Raumes" zu vermitteln.

## Patentansprüche

**1.** Einrichtung zum Gestalten der Akustik eines Raumes, die mindestens eine Schall absorbierende Einheit mit wenigstens einem Schall absorbierenden Element besitzt, wobei in die Schall absorbierende Einheit (1 bzw. 6) ein Lautsprecher (3, 4 bzw. 6,4) integriert ist,
**dadurch gekennzeichnet, dass**
die Schall absorbierende Einheit (1 bzw. 6) ein plattenförmiges Absorberelement (6) aufweist, das einen akustischen Absorber bildet, wobei diese eine Funktion durch eine zweite Funktion ergänzt ist, indem auf einer der Oberflächen dieses Absorberelements ein elektroakustischer Übertrager (4) festgelegt ist, der dazu vorgesehen ist, durch einen Tongenerator angesteuert zu werden.

**2.** Einrichtung nach Anspruch 1,
**dadurch gekennzeichnet, dass**
ein Material des Absorberelements eine relativ kleine Masse und eine hohe Biegesteifigkeit aufweist, wobei der elektroakustische Absorber, der im aktiven Betriebszustand schwingt, das Absorberelement seinerseits zu Biegeschwingungen und damit zur Schallabgabe anregt.

**3.** Einrichtung nach Anspruch 1 oder 2,
**dadurch gekennzeichnet, dass**
die Schall absorbierende Einheit sich einerseits wie ein passives akustisches Mittel verhält und Schall absorbiert, sich andererseits aber selbst als ein akustisches Mittel darstellt.

**3.** Einrichtung nach einem der vorhergehenden Ansprüche,
**gekennzeichnet durch**
eine einseitig auf das Absorberelement (6) aufgebrachte, in Bezug auf auftreffende Schallwellen abgewandt angeordnete Versteifungsschicht.

**4.** Einrichtung nach einem der vorhergehenden Ansprüche,
**dadurch gekennzeichnet, dass**
die Schall absorbierende Einheit in an sich bekannter Weise als eine Absorberplatte (6) ausgebildet ist, die aus einem offenporigen Glasschaummaterial besteht.

**5.** Einrichtung nach einem der vorhergehenden Ansprüche,
**dadurch gekennzeichnet, dass**
der Tongenerator (5) einen Signalempfänger (z. B. 51) mit einem Ausgang sowie eine Signalwandlereinheit (52) aufweist, die in der Übertragungsstrecke zwischen dem Ausgang des Signalempfängers und dem Eingang des elektroakustischen Übertragers (4) angeordnet ist.

**6.** Einrichtung nach Anspruch 5,
**dadurch gekennzeichnet, dass**
die Signalwandlereinheit (52) als ein digitaler Signalprozessor ausgebildet ist.

**7.** Einrichtung nach Anspruch 6,
**dadurch gekennzeichnet, dass**
der digitale Signalprozessor (52) derart programmiert ist, dass er das Produkt aus dem von dem Signalempfänger (z. B. 51) abgegebenen Signal mit einer Funktion generiert, die die inverse Funktion zu einer durch Messung ermittelten Wiedergabefunktion der zugeordneten Einheit bestehend aus absorbierender Einheit (1 bzw. 6) und darauf angeordnetem elektroakustischem Übertrager (4) bildet.

**8.** Einrichtung nach Anspruch 7,
**dadurch gekennzeichnet, dass**
der digitale Signalprozessor (52) derart programmiert ist, dass er ferner das von dem Signalempfänger (z. B. 51) abgegebene Signal um ein vorzugsweise wählbares Zeitintervall verzögert und/oder mit um einen gewählten Faktor veränderter Amplitude verarbeitet.

**9.** Einrichtung nach einem der Ansprüche 5 bis 7,
**dadurch gekennzeichnet, dass**
mehrere Schall absorbierende Einheiten (1 bzw. 6) mit jeweils darin integrierten Lautsprechern (1, 4 bzw. 6, 4) vorgesehen sind, wobei jeweils eine dieser absorbierenden Einheiten im praktischen Anwendungsfall einer bestimmten Wand des Raumes zugeordnet ist, dessen Akustik zu gestalten ist.

**10.** Einrichtung nach Anspruch 9,
**dadurch gekennzeichnet, dass**
die je einem der integrierten Lautsprecher (1, 4 bzw. 6, 4) zugeordneten Signalwandlereinheiten (52) untereinander elektronisch derart vernetzt sind, dass Ausgangsdaten einer der Signalwandlereinheiten nicht nur dem zugeordneten elektroakustischen Übertrager (4), sondern parallel dazu Eingängen der weiteren Signalwandlereinheiten zuführbar und dort verarbeitbar sind.
